# EUROPÄISCHE PATENTSCHRIFT

(11) **EP 2 038 371 B1**
(45) Veröffentlichungstag und Bekanntmachung des Hinweises auf die Patenterteilung: **02.03.2011**
(21) Anmeldenummer: 07726167.5
(22) Anmeldetag: 27.06.2007
(51) Int. Cl.: C09K 11/08

(54) **LUMINESZENZSTOFF-ZUSAMMENSETZUNG**
LUMINESCENT COMPOSITION
COMPOSITION D'UNE SUBSTANCE LUMINESCENTE

(30) Priorität: 27.06.2006 DE 102006029505; 07.07.2006 DE 102006031563
(43) Veröffentlichungstag der Anmeldung: 25.03.2009
(73) Patentinhaber: Swiss Authentication GmbH, 82538 Geretsried (DE); Swiss Authentication Research and Development AG, 8274 Tägerwilen (CH)
(72) Erfinder: EBERT, Dieter, 82057 Icking (DE)
(74) Vertreter: Weiss, Wolfgang
(86) Internationale Anmeldenummer: PCT/EP2007/005688
(87) Internationale Veröffentlichungsnummer: WO 2008/000461

(56) Entgegenhaltungen:
- EP-A1- 0 491 406
- JP-A- 8 041 454

## Beschreibung

Die Erfindung betrifft eine lumineszierende Zusammensetzung auf Basis von Yttriumoxidsulfid und weiteren Oxidsulfiden, der mindestens ein Dotierstoff zugesetzt ist. Die Zusammensetzung weist ein charakteristisches Emissionsspektrum auf und kann gegebenenfalls zusammen mit einem an das Emissionsspektrum angepassten Auslesesystem zur Markierung von Stoffen oder Stoffgemischen eingesetzt werden.

Verbindungen, die Lanthanoidionen in der Oxidationsstufe +3 enthalten, sind oftmals Lumineszenzstoffe, die bei Anregung mit Strahlung im Infrarotbereich kürzerwelliges Licht, z.B. im sichtbaren Bereich und/oder im UV-Bereich emittieren. Diese als "Upconversion" oder "Antistokes Fluoreszenz" bezeichnete Eigenschaft kann darauf zurückgeführt werden, dass Elektronen der 4f-Schale von Lanthanoidionen bei Bestrahlung durch sequentielle Mehrfachanregung in einen Energiezustand angehoben werden, der ein gegenüber der Absorption eines einzigen Photons erhöhtes Niveau aufweist. Aus diesem Energiezustand kann bei Relaxation ein energiereicheres Photon als das ursprünglich absorbierte Photon emittiert werden.

Die Verwendung von Lanthanoidoxidsulfiden als Antistokes-Lumineszenzstoffe ist beispielsweise in WO 00/60527 sowie in den US-Patenten 6 802 992 und 6 686 074 beschrieben. Weiterhin ist es bekannt, diese Lanthanoidoxidsulfide zur Markierung von Stoffen oder Stoffgemischen einzusetzen.

Gemäß vorliegender Erfindung werden neue lumineszierende Zusammensetzungen auf Basis der Oxidsulfide von Yttrium und mindestens drei anderen Elementen bereitgestellt, denen mindestens ein Dotierstoff, vorzugsweise ausgewählt aus Oxiden und/oder Fluoriden von Haupt- oder Nebengruppenelementen zugesetzt ist.

Ein Gegenstand der vorliegenden Erfindung ist eine lumineszierende Zusammensetzung, enthaltend
(a) ein Oxidsulfid von Yttrium und Oxidsulfide von mindestens drei weiteren Elementen ausgewählt aus Lanthan, Cer, Praseodym, Neodym, Samarium, Europium, Gadolinium, Terbium, Dysprosium, Holmium, Erbium, Thulium, Ytterbium und Lutetium und
(b) mindestens einen Dotierstoff, ausgewählt aus Oxiden und/oder Fluoriden von Haupt- oder Nebengruppenelementen.

Die erfindungsgemäße Zusammensetzung ist ein Lumineszenzstoff mit "Upconverter"- und/oder "Antistokes"-Eigenschaften. Sie liegt vorzugsweise in kristalliner Form vor. Weiterhin bevorzugt ist, dass die Zusammensetzung aus einer einzigen Phase, beispielsweise einer kristallinen Phase, besteht, wie durch röntgendiffraktometrische Methoden bestimmt werden kann. Die Zusammensetzung liegt üblicherweise in Form von Partikeln vor, wobei die mittlere Partikelgröße ≥ 50pm, insbesondere ≥ 1nm ist. Vorzugsweise liegt die Partikelgröße im Bereich von 1 nm-100 µm, vorzugsweise von 5 nm-50 µm und besonders bevorzugt von etwa 100 nm-10 µm.

Komponente (a) der Zusammensetzung wird aus einem Oxidsulfid von Yttrium und Oxidsulfiden von mindestens drei weiteren Elementen, wie zuvor angegeben, gebildet. Yttrium und die weiteren Elemente liegen üblicherweise als dreiwertige Kationen vor, so dass Komponente (a) der erfindungsgemäßen Zusammensetzung vorzugsweise wie folgt dargestellt werden kann:

Y₂O₂₊ₓS₁₋ₓ x (M¹/M²/M³)₂ O₂₊ₓS₁₋ₓ,

wobei M¹, M² und M³ dreiwertige Kationen von mindestens drei der zuvor genannten Elemente darstellen und X eine Zahl im Bereich zwischen 0 und 0,5, vorzugsweise 0 bis 0,2 ist. Besonders bevorzugt ist X gleich 0.

In der gesamten Komponente (a) liegt das Yttriumoxidsulfid vorzugsweise in einem Anteil von ≥ 90 mol-%, besonders bevorzugt von ≥ 92 mol-%, noch mehr bevorzugt von ≥ 94 mol-% und am meisten bevorzugt von ≥ 96 mol-% vor. Die weiteren Oxidsulfide liegen vorzugsweise in einem Anteil von jeweils bis zu 2 mol-% bezogen auf die gesamte Komponente (a) vor. Vorzugsweise sind die weiteren Oxidsulfide ausgewählt aus Oxidsulfiden von Erbium, Ytterbium und von mindestens einem weiteren Element, insbesondere von Lutetium, Gadolinium, Holmium, Thulium, Dysprosium und/oder Europium. Die Oxidsulfide von Erbium und Ytterbium liegen vorzugsweise in einem Anteil von jeweils 0,5-2 mol%, besonders bevorzugt von 1-2 mol-% bezogen auf die gesamte Komponente (a) vor. Die weiteren Oxidsulfide werden vorzugsweise in geringeren Anteilen von beispielsweise 0,1-1 mol-%, besonders bevorzugt 0,1-0,5 mol-% bezogen auf die gesamte Komponente (a) verwendet.

Beispielsweise kann die Komponente (a) der Zusammensetzung neben dem Oxidsulfid von Yttrium Oxidsulfide von 3, 4, 5, 6, 7 oder noch mehr weiteren Elementen enthalten.

Die erfindungsgemäße Zusammensetzung enthält zusätzlich als Komponente (b) mindestens einen Dotierstoff ausgewählt aus Oxiden und/oder Fluoriden von Haupt- oder Nebengruppenelementen. Die Dotierstoffe liegen vorzugsweise in einem Anteil jeweils bis zu 5 mol-%, besonders bevorzugt von jeweils bis zu 2 mol-%, noch mehr bevorzugt von jeweils bis zu 1 mol-%, noch mehr bevorzugt von 0,05-1 mol-% und am meisten bevorzugt von 0,1-0,2 mol-% bezogen auf die gesamten Komponenten (a) und (b) vor.

Ein bevorzugter Dotierstoff ist ein Fluorid, das beispielsweise als ein Erdalkalimetallfluorid oder als Alkalimetallfluorid, z.B. als Kaliumfluorid, eingesetzt werden kann. Das Fluorid liegt vorzugsweise in einem Anteil 0,1-0,2 mol-% bezogen auf die gesamten Komponenten (a) und (b) vor.

Weitere bevorzugte Dotierstoffe sind Erdalkalimetalle und/oder Nebengruppenelemente, die als zweifach oder noch höher positiv geladene Kationen, vorzugsweise in Form von Oxiden und/oder Fluoriden vorliegen. Besonders bevorzugte Dotierstoffe sind Calcium, Zink und/oder Titan, beispielsweise in Form der Oxide Calciumoxid, Zinkoxid bzw. Titandioxid. Die kationischen Dotierstoffe liegen vorzugsweise in einem Anteil von jeweils 0,1-0,2 mol-% bezogen auf die gesamten Komponenten (a) und (b) vor.

Die die Komponenten (a) und (b) enthaltenden lumineszierenden Zusammensetzungen zeichnen sich einerseits durch eine hohe Lumineszenzintensität und andererseits durch Emissionslinien bzw. -peaks aus, die für das Vorhandensein und die Anteile der einzelnen Komponenten charakteristisch sind. So können durch spezifische Kombinationen von Oxidsulfiden und Dotierstoffen eine praktisch unbegrenzte Zahl verschiedener Emissionsspektren erzeugt werden, die mit einem spezifisch für das jeweilige Spektrum angepassten Auslesesystem nachgewiesen werden können.

Die erfindungsgemäßen Zusammensetzungen können hergestellt werden, indem Yttriumoxid (Y₂O₃)-Pulver mit Oxiden der anderen Elemente, z.B. Ytterbiumoxid (Yb₂O₃), Erbiumoxid (Er₂O₃) und anderen Oxiden, wie etwa Ho₂O₃, Lu₂O₃ und/oder Gd₂O₃, sowie den Dotierstoffen oder Vorstufen davon, wie etwa TiO₂, CaCO₃, ZnO und/oder KF, durch Vermahlen homogenisiert und anschließend bei erhöhter Temperatur, z.B. 1200-1700 ° C, in einem Ofen vorzugsweise an Luft gesintert werden, um eine homogene Verteilung der Kationen im Kristallgitter zu erreichen. Anschließend wird das Sinterprodukt vermahlen und mit H₂S bei Temperaturen zwischen 700 °C und 1000 °C, vorzugsweise für 2-12 h, umgesetzt, wobei eine einheitliche Phase auf Basis von Y₂O₂S, enthaltend weitere Oxidsulfide sowie die Dotierstoffe, erhalten wird. Der Zusatz von Fluorid als Dotierstoff führt zu einer homogeneren Verteilung der Lanthanoidionen im Wirtsgitter während des Sinterprozesses. Der Zusatz von Dotierstoffen, z.B. von mehrwertigen Kationen und/oder Fluorid bewirkt drastische Veränderungen der Lage und/oder Intensitäten einzelner Emissionswellenlängen. Ferner wird auch eine starke Erhöhung der Lumineszenz-Gesamtintensität gefunden. Es wird angenommen, dass zusätzlich zu der bei Anti-Stokes Materialien bekannten Zweiphotonenabsorption auch eine Dreiphotonenabsorption stattfindet.

Die erfindungsgemäßen Lumineszenzstoffe können als Nachweis- und Markierungsstoffe, beispielsweise als Sicherheitsmarkierungen von Stoffen oder Stoffgemischen, verwendet werden. Auf diese Weise kann die Echtheit von Produkten oder Dokumenten bestimmt werden. Der Lumineszenzstoff kann, da er chemisch inert ist, in beliebige feste und/oder flüssige Stoffe oder Stoffgemische eingebracht oder darauf aufgebracht werden. Beispielsweise kann der Lumineszenzstoff Trägersubstanzen, wie etwa Lacke, Toner, Tinten, Farben etc., oder in Produkte, wie Kunststoffe, Metalle, Glas, Silikone, Papier, Gummi etc., aufgebracht bzw. eingebracht werden. Vorzugsweise wird das Lumineszenzstoff dem Produkt oder einem Teil des Produkts in einem Anteil von 10-50 ppm, vorzugsweise 50-200 ppm, hinzugesetzt. Auch zum Einsatz in biologischen Systemen, z.B. Zellkulturen, Proben aus Körperflüssigkeiten bzw. Gewebeschnitten oder als Kontrastmittel, ist der erfindungsgemäße Lumineszenzstoff geeignet. Dabei kann der Lumineszenzstoff in nano- oder mikropartikulärer Form an biologische Nachweisreagenzien gekoppelt werden. Weiterhin können die Oberflächen von Partikeln des Lumineszenzstoffes mit Deodetominen oder anderen Haftsubstanzen modifiziert werden, um die Suspendierungseigenschaften z.B. in organischen Flüssigkeiten, wie etwa Ölen, Benzinen, Flüssiggasen etc., in wäßrigen Flüssigkeiten, wie etwa Körperflüssigkeiten, in wäßrig-organischen Flüssigkeitssystemen und fließfähigen Pulvern, wie etwa Tonern, zu verbessern. Je kleiner die Partikel sind, desto geringer ist ihre Neigung zur Sedimentation. Durch intensives Mahlen kann z.B. die Partikelgröße soweit, z.B. auf ≤ 100pm verringert werden, dass auch ohne Zusatz von Haftsubstanzen eine stabile Suspension der Partikel in Flüssigkeiten erreicht wird.

Eine Fälschungssicherheit der Markierung ist dadurch gegeben, dass die für den jeweiligen Lumineszenzstoff charakteristischen Emissionslinien eine kryptografischen Schlüssel darstellen, die mit einem an den jeweiligen Stoff angepassten Detektor, d.h. dem Schloss, nachgewiesen werden können.

Der Nachweis des Vorhandenseins des Lumineszenzstoffes kann durch Bestrahlung mit einer Wellenlänge im Infrarotbereich, insbesondere mit IRmonokohärentem Laserlicht oder mit einer IR-Leuchtdiode mit Wellenlängen zwischen etwa 850 und 1500 nm, vorzugsweise zwischen etwa 920 und 1000 nm, besonders bevorzugt zwischen etwa 950-1000 nm, am meisten bevorzugt zwischen 920 und 985 nm erfolgen, wobei der Lumineszenzstoff angeregt und die Emissionsstrahlung im Bereich von für den jeweiligen Lumineszenzstoff charakteristischen Wellenlängen, etwa im Bereich zwischen 300 und 1700 nm, nachgewiesen wird. Die Bestrahlung erfolgt vorzugsweise mit einer Leistung von 1-200 mW, insbesondere 10-80 mW. Die Bestrahlung des den Lumineszenzstoff enthaltenden Produkts kann direkt oder mit einem Lichtwellenleiter oder einem anderen optisch relevanten Transfermedium, z.B. einem optischen Feststoffkörper, einem Fluid, Gas etc., erfolgen. Die Detektion kann visuell oder mittels Detektoren erfolgen.

Es können beispielsweise Lichtwellenleiter verwendet werden, deren Köpfe als Sammellinse geschliffen sind, so dass eingestrahltes Licht (IR-Licht) und vom Lumineszenzstoff emittiertes Licht (spezifisches Emissionsspektrum) eine Einheit bilden und im gleichen Punkt fokussiert sein können. Ein Vorteil dabei ist, dass keine mechanische Dejustierung zwischen Empfänger und Sender erfolgen kann. Der Dämpfungsfaktor des Lichtwellenleiters, z.B. aus Glas oder Kunststoff, kann variieren, wobei der Übergang von den optischen Bauelementen (Strahlungsquelle bzw. Detektionselement) zum Lichtwellenleiter kovisionsarm angebracht ist. Die Länge des Lichtwellenleiters kann variieren und liegt typischerweise zwischen 1cm und 50 cm.

In einer besonders bevorzugten Ausführungsform wird ein Lumineszenzstoff mit einem charakteristischen Emissionsspektrum durch ein an dieses Emissionsspektrum angepasstes Auslesesystem nachgewiesen. Das Auslesesystem enthält eine Strahlenquelle, vorzugsweise eine Strahlenquelle im IR-Bereich, und ein oder mehrere optische Detektionselemente, die für den selektiven Nachweis von spezifischen Emissionslinien des Lumineszenzstoffs, z.B. hinsichtlich der Wellenlänge und/oder Intensität, vorgesehen sind. Die Detektionselemente können beispielsweise Dioden, Fotoelemente oder elektronische Detektoren sein. Vorzugsweise werden Detektormatrices mit mehreren, vorzugsweise unterschiedlich eingestellten Detektoren verwendet, z.B. Dioden-, Fotoelemente- oder CCD-Matrices. Die Detektoren bzw.einzelne Detektoren der Detektormatrix können mit optischen Filtern, z.B. Bandpassfiltern, kombiniert werden, die auch auf das Detektionselement aufgedampft sein können. Die Filter werden vorzugsweise so gewählt, dass sie nur den Durchtritt von Licht in einem bestimmten Wellenlängenbereich, z.B. einem Bereich von 5-15 nm, vorzugsweise etwa 10 nm, ermöglichen. Die Filter enthalten vorzugsweise hoch- und niederbrechende Schichten, wie TiO₂ und SiO₂. Dadurch ist gewährleistet, dass Bandpassfilter mit sehr geringen Rise-Fall Flanken pro optischem Element bereitgestellt werden. Der Durchtritt von Licht, das nicht der für den Lumineszenzstoff charakteristischen Wellenlänge entspricht, wird verhindert.

Durch Verwendung von Detektoren bzw. Detektormatrices, die mehrere Emissionslinien unterschiedlicher Wellenlänge, z.B. 2, 3, 4 oder mehr Emissionslinien, nachweisen, die für einen jeweiligen Lumineszenzstoff charakteristisch sind, kann ein Verifikationssystem mit hohem Sicherheitsgrad bereitgestellt werden. Gegebenenfalls kann das Auslesesystem auch Detektoren enthalten, die bei Wellenlängen arbeiten, bei denen keine Emissionslinie liegt, und somit als negative Kontrolle dienen.

Das Auslesesystem kann außerdem gegebenenfalls eine programmierbare elektronische Einheit enthalten, die sich nach Bedarf auf jeweils andere Emissionslinien umprogrammieren läßt.

Ferner können mehrere unterschiedliche Lumineszenzstoffe auf ein Produkt oder einen Träger aufgebracht werden, die entweder visuell mit unterschiedlichen Farben und/oder durch Detektoren ausgewertet werden können. Dabei können diese unterschiedlichen Applikationen unter-, über- oder nebeneinander angeordnet sein, so dass ein komplexes und charakteristisches Muster ergeben. So werden beispielsweise bei Aufbringen zweier verschiedener Lumineszenzstoffe auf einem Produkt nebeneinander bei Bestrahlung mit einer geeigneten IR-Quelle zwei verschiedene Farben emittiert, wobei man einen Flip-Flop-Effekt erhält.

Das erfindungsgemäße Verifikationssystem kann auch mit anderen Verifikationssystemen, z.B. basierend auf Bakteriorhodopsin oder spezifischen DNA-Sequenzen kombiniert werden.

Weiterhin soll die vorliegende Erfindung durch das nachfolgende Beispiel erläutert werden.

### Beispiel 1: Herstellung eines Lumineszenzstoffs

Pulverförmiges Yttriumoxid wurde mit pulverförmigen Oxiden von Ytterbium und Erbium jeweils in Anteilen von 1-2 mol-% und anderen Lanthanoidoxiden, wie etwa Oxiden von Holmium, Lutetium und/oder Gadolinium, jeweils in Anteilen von 0,1-0, 5 mol-% sowie Dotierstoffen TiO₂, CaCO₃, ZnO und/oder KF jeweils in Anteilen von 0,1-0,2mol-% für 3 h in einer Kugelmühle vermahlen. Die resultierenden Mischungen wurden in einem Ofen bei 1500 °C für 24-72 h an Luft gesintert. Die Phasenreinheit der resultierenden Sinterprodukte wurde durch röntgendiffraktometrische Analyse bestätigt. Anschließend wurden die Sinterprodukte gemahlen und die resultierenden Pulver mit H₂S bei Temperaturen zwischen 800 °C und 900 °C für 2-12 h umgesetzt. Es wurden phasenreine kristalline Verbindungen des Y₂O₂S-Typs erhalten, wie durch röntgendiffraktometrische Untersuchung bestätigt wurde.

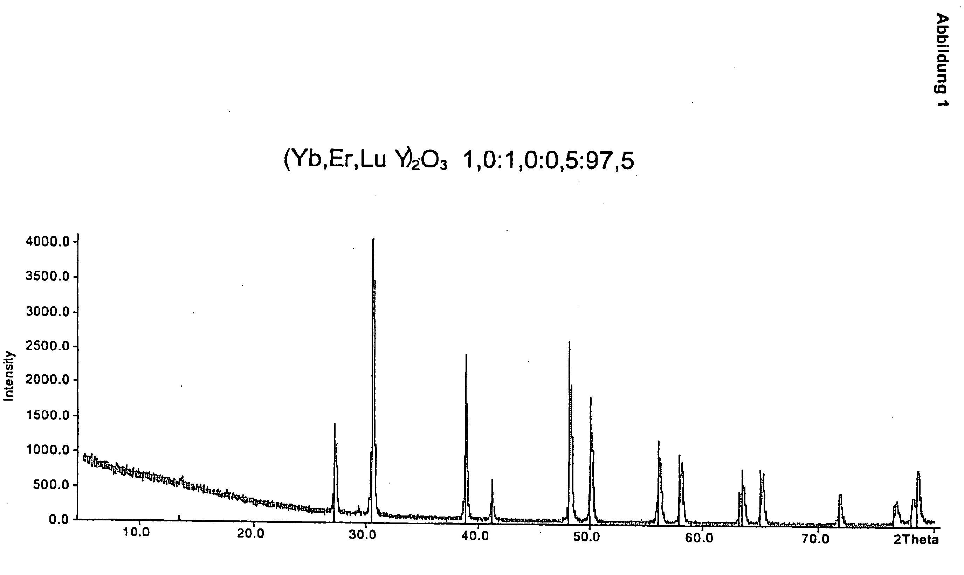

**Abbildung 1** zeigt die Röntgenpulverbeugungsmessung an einer Probe der Zusammensetzung (Yb, Er, Lu, Y)₂O₃ im Verhältnis 1,0:1,0:0,5:97,5. Die Messung wurde mit einem Siemens D5000 Diffraktometer (Kupfer-K-alpha-Strahlung) durchgeführt. Zu sehen sind nur Gitterreflexe des Wirtsgitters Y₂O₂S (Bildung von Substitutionsmischkristallen). Es ist lediglich eine leichte Verschiebung der Reflexe durch die in das Wirtsgitter eingebauten anderen Ionen zu erkennen. Da keine weiteren Reflexe zu beobachten sind, handelt es sich um ein phasenreines kristallines Produkt, welches keine weiteren kristallinen Phasen (Nebenphasen) enthält.

## Patentansprüche

1. Lumineszierende Zusammensetzung, enthaltend
(a) ein Oxidsulfid von Yttrium und Oxidsulfide von mindestens drei weiteren Elementen ausgewählt aus Lanthan, Cer, Praseodym, Neodym, Samarium, Europium, Gadolinium, Terbium, Dysprosium, Holmium, Erbium, Thulium, Ytterbium und Lutetium und
(b) mindestens einen Dotierstoff, ausgewählt aus Oxiden und/oder Fluoriden von Haupt- oder Nebengruppenelementen,
wobei die weiteren Oxidsulfide ausgewählt sind aus Oxidsulfiden von Erbium, Ytterbium und von mindestens einem weiteren Element, insbesondere von Lutetium, Gadolinium, Holmium, Thulium, Dysprosium und/oder Europium,
worin die Dotierstoffe in einem Anteil von jeweils bis zu 5 mol-%, vorzugsweise bis zu 1 mol-%, bezogen auf die gesamten Komponenten (a) und (b) vorliegen und worin die Zusammensetzung in einer einzigen Phase vorliegt.

2. Zusammensetzung nach Anspruch 1,
**dadurch gekennzeichnet,**
**dass** Yttriumoxidsulfid in einem Anteil von ≥ 90 mol % bezogen auf die gesamte Komponente (a) vorliegt, und/oder dass die weiteren Oxidsulfide in einem Anteil von jeweils bis zu 2 mol % bezogen auf die gesamte Komponente (a) vorliegen.

3. Zusammensetzung nach einem der Ansprüche 1 bis 2,
**dadurch gekennzeichnet,**
**dass** sie ein Fluorid als Dotierstoff enthält und/oder dass sie ein Erdalkalimetall und/oder ein Nebengruppenelement, insbesondere Calcium, Zink und/oder Titan, als Dotierstoff enthält.

4. Zusammensetzung nach einem der Ansprüche 1 bis 3,
**dadurch gekennzeichnet,**
**dass** sie in kristalliner Form vorliegt.

5. Zusammensetzung nach einem der Ansprüche 1 bis 4 in Form von Partikeln, wobei die mittlere Partikelgröße vorzugsweise im Bereich von 1 nm-100 µm liegt.

6. Zusammensetzung nach einem der Ansprüche 1 bis 5, eingebracht in oder aufgetragen auf einen Stoff oder ein Stoffgemisch, wobei sie vorzugsweise in einem Anteil von 10-500 ppm im Stoff oder Stoffgemisch enthalten ist.

7. Verwendung einer lumineszierenden Zusammensetzung nach einem der Ansprüche 1-5 zur Markierung von Stoffen oder Stoffgemischen.

8. Verwendung nach Anspruch 7,
**dadurch gekennzeichnet,**
**dass** mehrere unterschiedliche Zusammensetzungen als Mischung oder als Muster in den Stoff oder das Stoffgemisch eingebracht oder darauf aufgebracht werden.

9. Verwendung nach Anspruch 7 oder 8,
**dadurch gekennzeichnet,**
**dass** eine lumineszierende Zusammensetzung mit einem charakteristischen Emissionsspektrum durch ein daran angepasstes Auslesesystem nachgewiesen wird.

10. Verwendung nach einem der Ansprüche 7 bis 9,
**dadurch gekennzeichnet,**
**dass** die Zusammensetzung durch Bestrahlung mit einer Wellenlänge im Bereich von etwa 850-1500 nm, insbesondere von etwa 920-1000 nm, zur Lumineszenz angeregt und die Emissionsstrahlung in einem Bereich von 300-1700 nm nachgewiesen wird.

11. Verwendung eines Auslesesystems zum Nachweis eines markierten Stoffs oder Stoffgemischs, enthaltend:
(i) eine Strahlenquelle, vorzugsweise eine Strahlenquelle im IR-Bereich, und
(ii) einen oder mehrere optische Detektoren, die für den selektiven Nachweis von spezifischen Emissionslinien eines Lumineszenzstoffes vorgesehen sind,
wobei der Stoff oder das Stoffgemisch mit mindestens einer lumineszierenden Zusammensetzung nach einem der Ansprüche 1-7 markiert ist.

12. Verwendung nach Anspruch 11,
**dadurch gekennzeichnet,**
**dass** mehrere optische Detektoren für den selektiven Nachweis von jeweils unterschiedlichen Emissionslinien vorgesehen sind.

13. Stoff oder Stoffgemisch, in das eine Zusammensetzung nach einem der Ansprüche 1-5 eingebracht oder darauf aufgebracht ist.

## Claims

1. A luminescent composition containing
(a) an oxide sulphide of yttrium and oxide sulphides of at least three further elements selected from lanthanum, cerium, praseodymium, neodymium, samarium, europium, gadolinium, terbium, dysprosium, holmium, erbium, thulium, ytterbium and lutetium, and
(b) at least one doping agent selected from oxides and/or fluorides of main group or subgroup elements, wherein the further oxide sulphides are selected from oxide sulphides of erbium, ytterbium and from at least one further element, in particular from lutetium, gadolinium, holmium, thulium, dysprosium and/or europium,
wherein the doping agents are present in a proportion of in each case up to 5 mol. %, preferably up to 1 mol. %, in relation to all the components (a) and (b) and wherein the composition is present in a single phase.

2. A composition according to Claim 1, **characterised in that** the yttrium oxide sulphide is present in a proportion of ≥ 90 mol. % in relation to the entire component (a), and/or **in that** the further oxide sulphides are present in a proportion of in each case up to 2 mol. % in relation to the entire component (a).

3. A composition according to Claim 1 or 2, **characterised in that** it contains a fluoride as doping agent, and/or **in that** it contains an alkaline earth metal and/or a subgroup element, in particular calcium, zinc and/or titanium, as doping agent.

4. A composition according to any one of Claims 1 to 3, **characterised in that** it is present in crystalline form.

5. A composition according to any one of Claims 1 to 4 in the form of particles, wherein the average particle size preferably lies in the range of 1 nm-100 µm.

6. A composition according to any one of Claims 1 to 5, introduced into or applied to a substance or a mixture of substances, wherein it is preferably contained in a proportion of 10-500 ppm in the substance or a mixture of substances.

7. Use of a luminescent composition according to any one of Claims 1 to 5 for labelling substances or mixtures of substances.

8. Use according to Claim 7, **characterised in that** a plurality of different compositions are introduced into or applied to the substance or the mixture of substances as a mixture or as a sample.

9. Use according to Claim 7 or 8, **characterised in that** a luminescent composition with a characteristic emission spectrum is detected by a reading system adapted thereto.

10. Use according to any one of Claims 7 to 9, **characterised in that** the composition is excited to luminescence by irradiation at a wavelength in the range of approximately 850-1500 nm, in particular of approximately 920-1000 nm, and the emitted radiation is detected in a range of 300-1700 nm.

11. Use of a reading system for detecting a labelled substance or mixture of substances, comprising
(i) a radiation source, preferably a radiation source in the IR range, and
(ii) one or more optical detectors which are provided for the selective detection of specific emission lines of a luminescent substance,
wherein the substance or mixture of substances is labelled with at least one luminescent composition according to any one of Claim 1 to 7.

12. Use according to Claim 11, **characterised in that** a plurality of optical detectors are provided for the selective detection of respectively different emission lines.

13. A substance or mixture of substances, into which a composition according to any one of Claims 1 to 5 is introduced or applied thereto.

## Revendications

1. Composition luminescente contenant
(a) un oxysulfure d'yttrium et des oxysulfures d'au moins trois autres éléments choisis parmi le lanthane, le cérium, le praséodyme, le néodyme, le samarium, l'europium, le gadolinium, le terbium, le dysprosium, le holmium, l'erbium, le thulium, l'ytterbium et le lutétium et
(b) au moins une substance dopante choisie parmi les oxydes et/ou fluorures d'éléments de groupes principaux ou de sous-groupes,
où les autres oxysulfures sont choisis parmi les oxysulfures d'erbium, d'ytterbium et d'au moins un autre élément, en particulier de lutétium, gadolinium, holmium, thulium, dysprosium et/ou europium,
où les substances dopantes sont présentes en une proportion de jusqu'à 5 mol %, de préférence jusqu'à 1 mol %, dans chaque cas, par rapport aux composants (a) et (b) totaux et où la composition est présente dans une phase unique.

2. Composition selon la revendication 1 **caractérisée en ce que** l'oxysulfure d'yttrium est présent en une proportion ≥ 90 mol % par rapport au composant (a) total, et/ou **en ce que** les autres oxysulfures sont présents en une proportion de jusqu'à 2 mol %, dans chaque cas, par rapport au composant (a) total.

3. Composition selon l'une des revendications 1 à 2 **caractérisée en ce qu'**elle contient un fluorure comme substance dopante et/ou **en ce qu'**elle contient un métal alcalino-terreux et/ou un élément d'un sous-groupe, en particulier le calcium, le zinc et/ou le titane, comme substance dopante.

4. Composition selon l'une des revendications 1 à 3 **caractérisée en ce qu'**elle est présente sous forme cristalline.

5. Composition selon l'une des revendications 1 à 4 sous forme de particules, où la taille de particule moyenne est située de préférence dans le domaine de 1 nm - 100 µm.

6. Composition selon l'une des revendications 1 à 5 introduite dans ou appliquée sur une substance ou un mélange de substances, où elle est contenue de préférence en une proportion de 10 - 500 ppm dans la substance ou le mélange de substances.

7. Utilisation d'une composition luminescente selon l'une des revendications 1 - 5 pour le marquage de substances ou de mélanges de substances.

8. Utilisation selon la revendication 7 **caractérisée en ce que** plusieurs compositions différentes sont introduites dans ou appliquées sur la substance ou le mélange de substances sous forme de mélange ou de motif.

9. Utilisation selon la revendication 7 ou 8 **caractérisée en ce qu'**une composition luminescente ayant un spectre d'émission caractéristique est mise en évidence par un système de lecture adapté.

10. Utilisation selon l'une des revendications 7 à 9 **caractérisée en ce que** la composition est excitée pour émettre une luminescence par irradiation avec une longueur d'onde dans le domaine d'environ 850 - 1500 nm, en particulier d'environ 920 - 1000 nm, et le rayonnement d'émission est mis en évidence dans un domaine de 300 - 1700 nm.

11. Utilisation d'un système de lecture pour la mise en évidence d'une substance marquée ou d'un mélange de substances marqué, contenant :
(i) une source de rayonnement, de préférence une source de rayonnement dans le domaine IR, et
(ii) un ou plusieurs détecteurs optiques, qui sont prévus pour la mise en évidence sélective de raies d'émission spécifiques d'une substance luminescente,
où la substance ou le mélange de substances est marquée avec au moins une composition luminescente selon l'une des revendications 1-7.

12. Utilisation selon la revendication 11 **caractérisée en ce que** plusieurs détecteurs optiques sont prévus pour la mise en évidence sélective de raies d'émission différentes.

13. Substance ou mélange de substances dans laquelle ou lequel une composition selon l'une des revendications 1 - 5 est introduite ou sur laquelle ou lequel elle est appliquée.
